# EUROPÄISCHE PATENTANMELDUNG

(11) **EP 0 572 800 A1**
(43) Veröffentlichungstag der Anmeldung: **08.12.1993**
(21) Anmeldenummer: 93106933.0
(22) Anmeldetag: 29.04.1993
(51) Int. Cl.: G01B 5/00, G01B 7/00

(54) **Tastfühler**

(30) Priorität: 06.05.1992 DE 4214472; 18.05.1992 DE 4216215; 18.05.1992 DE 9206599 U
(71) Anmelder: BAUMER ELECTRIC AG, CH-8500 Frauenfeld (CH)
(72) Erfinder: Hobe, Max, D-88255 Baindt (DE)
(74) Vertreter: Weiss, Peter, Dr. rer.nat.

(57) **Zusammenfassung**

Bei einem Tastfühler zur Erfassung einer Auslenkung eines Taststiftes od. dgl., welcher mit einem bewegbaren Wippelement (8) verbunden ist, soll das Wippelement (8) bei seiner Auslenkung in eine beliebige horizontale und/oder vertikale Richtung einen Sensor (34) ansprechen, welcher ein Schaltsignal an eine Erfassungseinheit abgibt und in mindestens einer Richtung dynamisch Meßwerte aufnehmen kann.

## Beschreibung

Die Erfindung betrifft einen Tastfühler zur Erfassung einer Auslenkung eines Taststiftes od. dgl., welcher mit einem bewegbar gelagerten Wippelement verbunden ist.

Tastfühler finden beispielsweise in Meßeinrichtungen Anwendung, die mit einem relativ zu einem vermessenden Werkstück bewegbaren Taststift bestückt sind. Bei einem Meßvorgang wird der Meßfühler zu dem Werkstück hin bewegt, bis der Taststift das Werkstück berührt und aus seiner selbst bestimmten Position ausgelenkt wird. Im Tastfühler wird dann ein Signal erzeugt, das an eine entsprechende Meßeinrichtung weitergegeben wird. Wird das Werkstück von mehreren Seiten her mit dem Taststift angefahren, so kann hierdurch die Ausgestaltung des Werkstückes erfaßt werden.

Derartige Tastfühler oder Tastköpfe sind bekannt. Beispielsweise wird hier auf die DE-PS 23 47 633 verwiesen. Dort ragen von dem Taststift drei Arme radial weg, die jeweils an Flanken einer durch zwei Lagerkugeln gebildeten V-förmigen Kerbe liegen. Der Erfassung des Schaltsignals dient ein elektrischer Stromkreis, der geschlossen ist, wenn sich der Taststift in seiner Nullstellung befindet. Der Stromkreis verläuft in Reihenschaltung durch die Lagerkugeln, wobei in Nullstellung die von dem Taststift abragenden Arme als Brückenkontakte wirken. Sobald ein Arm angehoben wird, wird dieser Stromkreis unterbrochen und somit ein Signal erzeugt. Nachteilig ist hierbei, daß eine Auslenkung des Taststiftes in seiner vertikalen Richtung nur nach oben, erfaßt werden kann. Um auch diese Richtung zu berücksichtigen ist eine Schachtelung dieses Systems erforderlich. Ferner ist ein sogenanntes dynamisches Messen, beispielsweise in Verbindung mit einem Rundtisch oder desgleichen nicht möglich, da bei jeder Auslenkung des Taststiftes in allen anderen Richtungen keine definierte Lagebestimmung mehr möglich ist. Desweiteren ist bei einer Auslenkung in axialer Richtung eine automatische Rückführung der Arme in ihre Lagerkugeln nicht gewährleistet. Es könnten bei einem zurückfallen der Arme in ihre Ruhelage diese neben die eigentlichen Lagerkugeln fallen. Aus diesem Grunde müssen zusätzliche Zentrierungsmaßnahmen getroffen werden.

Der vorliegenden Erfindung liegt die Aufgabe zugrunde, diese Nachteile zu beheben und einen Tastfühler der o.g. Art zu schaffen, welcher sehr einfach zu bedienen ist, äußerst wirkungsvoll jede Auslenkung in jede beliebige Richtung aufnimmt und bei welchem es möglich ist, bei Bedarf, in mindestens einer Richtung dynamisch Meßwerte aufzunehmen.

Zur Lösung der Aufgabe führt, daß das Wippelement bei seiner Auslenkung in eine beliebige horizontale und/oder vertikale Richtung einen Sensor anspricht, welcher ein Signal an eine Erfassungseinheit abgibt und in mindestens einer Richtung dynamische Meßwerte aufnehmen kann.

Hierdurch wird zumindest der erste Teil der Aufgabe gelöst, daß nämlich jede Bewegung des Wippelementes, gleich in welche Richtung, erfaßt wird. Dies gilt insbesondere für die bislang meist unberücksichtigte Richtung des Absenken des Taststiftes, beispielsweise, wenn ein Zug auf den Taststift ausgeübt wird. Dies kann bei manchen Meßvorgängen notwendig sein.

Ein weiteres wesentliches Merkmal der vorliegenden Erfindung ist die Lagerung des Wippelementes. Diese wird zwischen einem ortsfesten Lager, welches die Lagebestimmung in zwei Achsen, und einem bewegbaren Widerlager, welches die Lagebestimmung in der anderen Achse übernimmt, vorgenommen. Das hat zur Folge, daß bei einer Bewegung des Wippelementes, gleich in welche Richtung, nur das bewegbare Widerlager anspricht und entsprechend lageverändert wird, so daß hier ein Sensor genügt, um diese Bewegung zu erfassen. Dies geschieht sowohl bei einer vertikalen Bewegung des Wippelementes, als auch bei einer beliebigen Kippbewegung.

Damit das Wippelement zwischen Lager und Widerlager gehalten wird, sind entsprechende Abstützungen vorgesehen, die gleichzeitig eine Rückführung des Wippelementes in eine Ausgangslage bewirken. Bevorzugt handelt es sich bei den Abstützungen um jeweils zwei zusammenwirkende Kugeln, wobei in deren Zwischenraum ein Querbolzen an beiden Kugeln seitlich anschlägt. Mit dem Querbolzen ist das Wippelement verbunden. Wird somit das Wippelement aus seiner Ruhelage ausgelenkt, so gleitet der Querbolzen zumindest einer Kugel auf, wobei das Wippelement dabei gegen das Widerlager drückt und dieses Widerlager in einer Parallelbewegung seine Position verändert. Hierdurch wird der o.g. Sensor angesprochen. Die Oberfläche der Kugel versucht aber gleichzeitig wieder den Querbolzen in seine Ruhelage zurückzuführen, was in dem Augenblick geschieht, wenn der Druck auf den Taststift bei der Auslenkung aufhört.

Es versteht sich von selbst, daß die eben genannten Abstützungen bzw. der Querbolzen im Wechselspiel am Widerlager bzw. Lager und Wippelement angeordnet sein können. In einem Ausführungsbeispiel befinden sich die übereinander angeordneten Kugeln in dem Lager, während sich die Abstützungen für den Stift, welche ebenfalls aus Kugeln bestehen, am Widerlager befinden und auch der Querbolzen, welcher die zweite Abstützung bildet, in das Widerlager eingesetzt ist. Im zweiten Ausführungsbeispiel sind alle Kugeln im Wippelement angeordnet.

Zur weiteren Halterung des Wippelementes und auch zur Bewegungsbegrenzung der Querbolzen und des eben genannten Stiftes sollte das Element eine weitere Festlegung aufweisen. Diese Festlegung muß aber die o.g. Bewegungen des Wippelementes zulassen. Hierzu dient im bevorzugten Ausführungsbeispiel eine Einformung in dem Wippelement, in welchem ein Querbolzen liegt, wobei der Querbolzen etwa parallel zu dem eben genannten Querbolzen angeordnet ist. Hierdurch wird ein Verschieben des Wippelementes aus dem Lager bzw. Widerlager begrenzt. Bevorzugt soll hierbei ferner dem Muldengrund der Einformung ein Langloch eingeformt sein, welches etwa senkrecht zu dem eben genannten Querbolzen verläuft. Aus dem Muldengrund ragt ein Stiftausschnitt, auf dem entlang der Querbolzen gleiten kann. Hierdurch wird die Bewegung des Wippelementes erleichtert.

Im bevorzugten bzw. ersten Ausführungsbeispiel ist das Wippelement als Wippbolzen ausgestaltet, dessen eines Ende mit dem Taststift verbunden ist und in dessen anderes Ende der Stift eingesetzt wird, während der Querbolzen dazwischen etwa senkrecht angeordnet ist. Die Erfindung funktioniert jedoch auch dann, wenn der Taststift an einer anderen Stelle, wie z.B. im zweiten Ausführungsbeispiel, des Wippelementes festgelegt wird, so daß er beispielsweise senkrecht zu dem o.g. Stift aus dem Widerlager bzw. Lager herausragt. Das Wegfallen einer Meßrichtung muß hier eventuell in Kauf genommen werden, wobei jedoch die Möglichkeit des dynamischen Messens hierdurch verbessert wird und sogar in vier Richtungen möglich ist. Auch diese Ausführungsformen sollen vom Erfindungsgedanken umfaßt sein. Es wird als selbstverständlich gesehen, daß die in den Ausführungsbeispielen verwendeten Kugeln bzw. Bolzen auch durch andere Elemente, die jedoch den gleichen Zweck erfüllen, verwendet werden können.

Wie oben erwähnt, soll das Lager ortsfest angeordnet sein. Dies geschieht bevorzugt in einem Einsatz, welcher einen Parallelrahmen aufweist, der das Lager und auch das Widerlager umläuft. Dieser Rahmen nimmt die Bewegung des Widerlagers auf und überträgt sie an einen Sensor. Damit dies geschehen kann, muß entweder der Rücken des ortsfesten Lagers abgeschrägt sein, damit eine Bewegung des Rahmens möglich wird oder aber der Rahmen ist parallelogrammartig ausgebildet, wobei der das ortsfeste Lager umlaufende Teil des Rahmens einen Abstand von diesem einhält. Es ist natürlich auch möglich, einen rechteckigen Rahmen zu wählen, der von vornherein in einem gewissen Abstand von dem ortsfesten Lager angeordnet ist, so daß er einer Bewegung des Widerlagers nachgeben kann.

Bevorzugt soll der Rahmen an einem oberen Ring angeordnet sein, welcher beispielsweise in ein Gehäuse eingeschraubt wird. Vor dem Einschrauben wird dann in den Rahmen das Lager eingesetzt und mit dem oberen Ring beispielsweise durch Schrauben verbunden. Ferner wird das Widerlager eingesetzt, wobei es jedoch mit dem Rahmen verbindbar ist. Das Widerlager kann im übrigen auch so ausgeformt sein, daß es einen Teil des Rahmens bildet.

Im vorliegenden Ausführungsbeispiel wird bevorzugt als Sensor zumindest ein Dehnungsstreifen benutzt, welcher auf eine Bewegung des Rahmens reagiert. Im Rahmen der Erfindung liegen jedoch auch andere Sensoren, welche die Bewegung des Rahmens bzw. des Widerlagers aufnehmen können. Hier sind viele Variationen denkbar.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine teilweise geöffnete Seitenansicht eines erfindungsgemässen Tastfühlers;
Figur 2 eine weitere, teilweise geöffnete Seitenansicht des Tastfühlers gemäß Figur 1 um 90° gedreht;

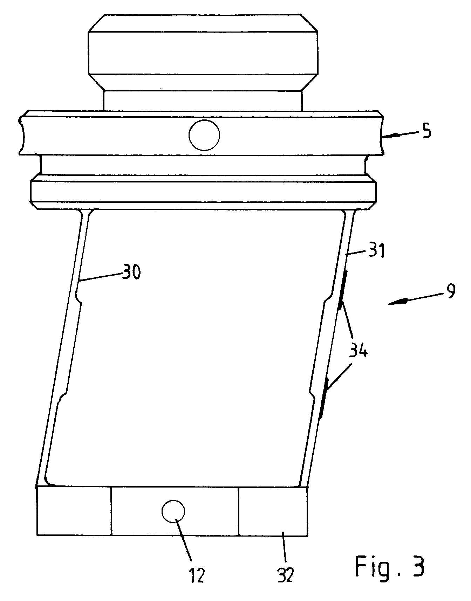

Figur 3 eine Seitenansicht eines Einsatzes für den Tastfühler gemäß Figur 2;
Figur 4 eine Unteransicht des Einsatzes gemäß Figur 3;
Figur 5 eine perspektivische Ansicht eines Widerlagers;
Figur 6 eine Draufsicht auf ein Lager zur Verwendung in dem Tastfühler gemäß Figur 1;
Figur 7 eine teilweise geöffnete Seitenansicht eines erfindungsgemässen Tastfühlers in einer weiteren Variation;
Figur 8 eine weitere, teilweise geöffnete Seitenansicht des Tastfühlers gemäß Figur 7 um 90° gedreht.

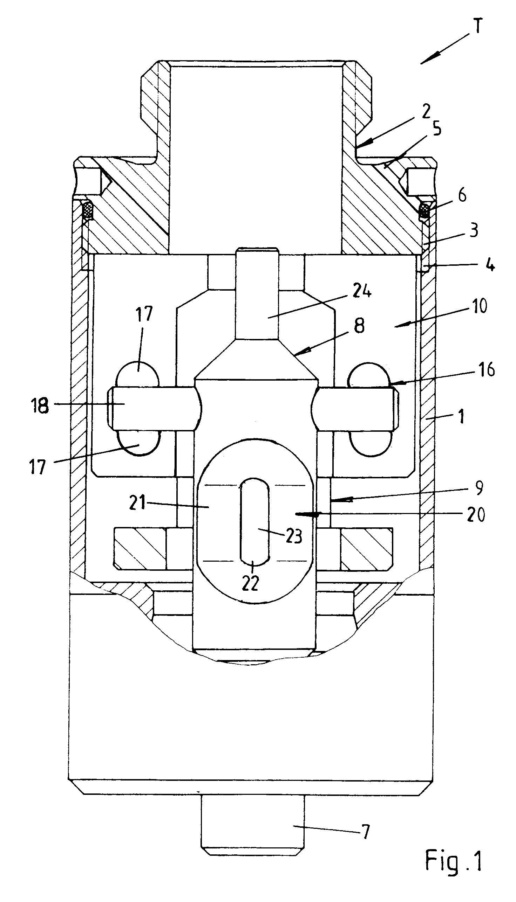

Ein erfindungsgemäßer Tastfühler T weist gemäß den Figuren 1, 2, 7 und 8 ein etwa zylindrisches Gehäuse 1 auf, in welches von oben her ein Einsatz 2 eingeschraubt ist. Hierzu kämmt ein Außengewinde 3 des Einsatzes 2 ein Innengewinde 4 in dem zylindrischen Gehäuse 1. Ferner ist zwischen dem zylindrischen Gehäuse 1 und dem Einsatz 2 bzw. einem oberen Ring 5 des Einsatzes 2 ein O-Ring 6 eingelegt.

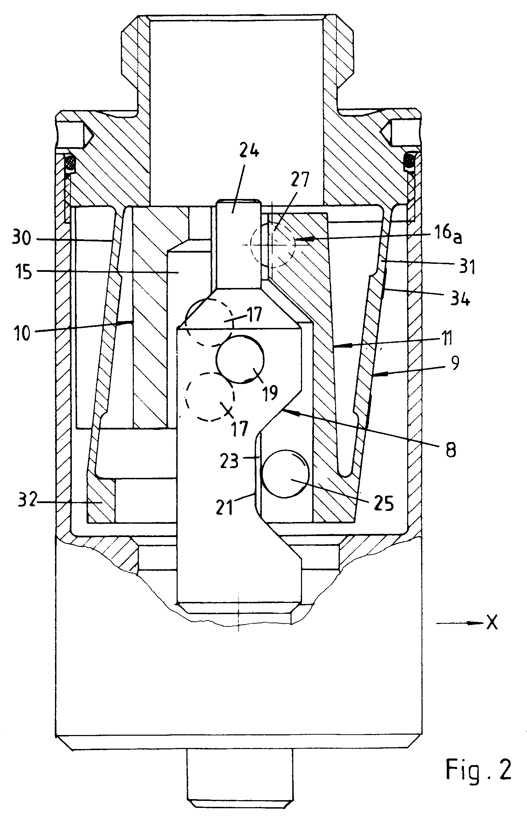

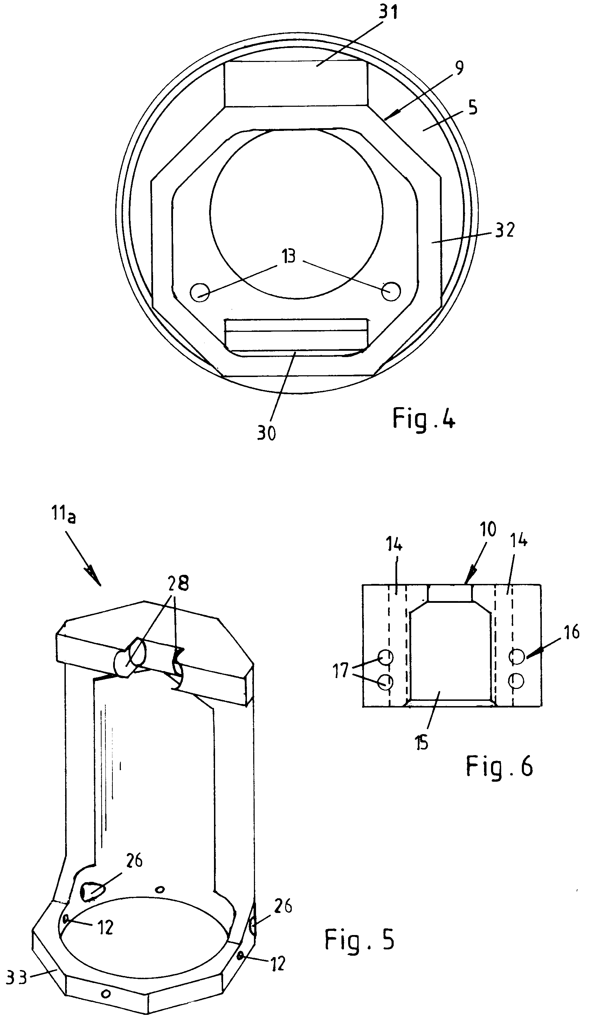

Gegenüber von dem oberen Ring 4 ist das zylindrische Gehäuse 1 im übrigen, nicht näher gezeigt, offen. In die Öffnung greift ein Anschlußstück 7 für einen nicht näher gezeigten Taststift ein, der in der lichten Weite dieser Öffnung bewegbar ist. Dieses Anschlußstück 7 findet dabei seine Ankopplung an einem Wippbolzen 8, welcher eine Auslenkung des Taststiftes aufnimmt und überträgt und auch die Rückführung des Taststiftes in eine Ausgangslage übernimmt. Hierzu sitzt der Wippbolzen 8 in einem, in Figur 2 gezeigten parallelogrammartigen Rahmen 9 und stützt sich einerseits gegen ein Lager 10 und andererseits gegen ein Widerlager 11 ab, wobei das Lager 10 fest mit dem Einsatz 2 bzw. im zweiten Ausführungsbeispiel mit dem Gehäuse 1 verbunden ist, während das Widerlager 11 parallel bewegbar angeordnet ist. In Figur 2 ist dargestellt, daß das Widerlager 11 integrierter Bestandteil des parallelogrammartigen Rahmens 9 ist. Im Rahmen der Erfindung liegt jedoch auch, daß das Widerlager 11 als selbständiger Einsatz ausgebildet ist, der nachträglich in den Rahmen 9 eingesetzt und über Stifte, welche entsprechende Durchgangsbohrungen 12 queren, festgelegt ist. Ein derartiges separates Widerlager 11a ist in Figur 5 angedeutet. Da grundsätzlich gewährleistet sein sollte, daß das Wiederlager eine parallele Ausweichbewegung machen muß, kann dieses Widerlager auch durch eine andere Art von Linearbewegung, z.B. Linear-Kugelführung, geführt werden. In diesem Fall müsste durch ein geeignetes Vorspannelement die Rückstellbewegung ausgeführt werden.

Die Festlegung des Lagers 10, welches im übrigen in Figur 6 noch gesondert dargestellt ist, erfolgt über nicht näher gezeigte Schrauben, welche entsprechende Bohrungen 14 in dem Lager 10 durchsetzen und in Gewindelöcher 13 in dem oberen Ring 5 eingreifen. Ferner ist in Figur 6 erkennbar, daß beidseits einer Mulde 15 an dem Lager 10 eine Abstützung 16 angeordnet ist, welche im vorliegenden Ausführungsbeispiel aus zwei Kugeln 17 besteht. In Gebrauchslage liegt den beiden Kugeln 17, wie in Figur 1 gezeigt, ein Querbolzen 18 an, welcher eine entsprechende Querbohrung 19 in dem Wippbolzen 8 durchsetzt.

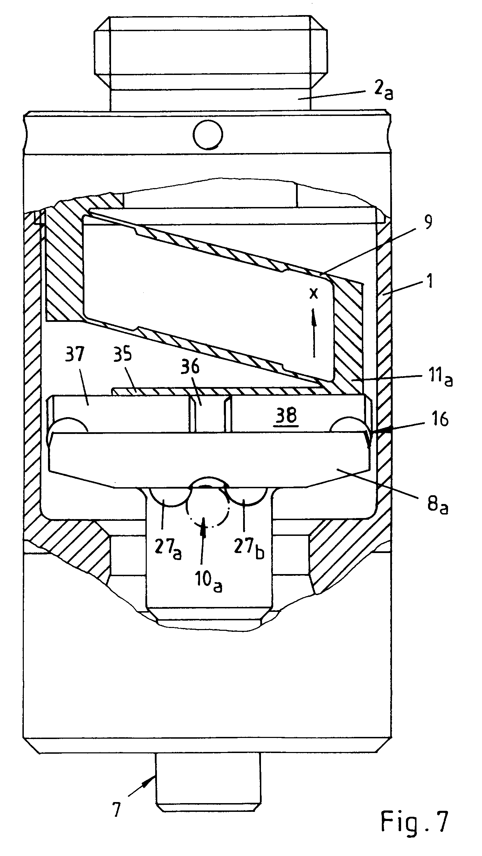

Unterhalb des Querbolzens 18 bzw. der Querbohrung 19 ist in dem Wippbolzen 8 eine muldenartige Anformung 20 vorgesehen, an deren Muldengrund 21 sich ein axiales Langloch 22 befindet. In diesem Langloch 22 überragt ein Stiftausschnitt 23 den Muldengrund 21, wobei der Stiftausschnitt 23 Teil eines in den Wippbolzen 8 axial eingeschobenes Stiftes 24 sein kann. Der den Muldengrund 21 überragende Stiftausschnitt 23 ist insbesondere in Figur 2 erkennbar und wirkt mit einem weiteren Querbolzen 25 zusammen, der in etwa parallel zu dem Querbolzen 18 verläuft, allerdings in das Widerlager 11 eingesetzt ist. Die entsprechenden Einschublöcher sind in Figur 5 mit 26 gekennzeichnet. Anstatt des Querbolzens, der die eben genannten Einschublöcher 26 durchsetzt, könnten auch hier wieder 2 Kugeln diese Abstützung übernehmen, was jedoch wie im zweiten Ausführungsbeispiel Figur 7 u. 8 dargestellt, eine Überbestimmung bedeuten kann.

Somit wird der Wippbolzen 8 in seiner Lage zwischen den beiden Lagern 10 und 11 gehalten, wobei eine Rückführung bei einer Auslenkung eines Taststiftes in Figur 1 nach links ober rechts über die Kugel 17 erfolgt, welche den Querbolzen 18 immer, durch die o.g. Parallelbewegung, wieder in eine waagrechte Position drängen. Ferner kann der Wippbolzen 8 vertikal nach oben oder unten ebenfalls unter Einwirkung auf den Taststift bewegt werden, wobei auch hier eine Rückführung durch die Kugeln 17 erfolgt. Ein vertikaler Versatz ist durch die langlochartige Ausbildung der Einformung 20 gewährleistet, da der Querbolzen 25 im Bereich der Einformung 20 frei ist.

Eine Rückführung des Wippbolzens 8 bei dessen Bewegung nach links und rechts gemäß Figur 2 erfolgt über eine weitere Abstützung 16a, welche wiederum bevorzugt aus zwei Kugeln 27 gebildet ist, die in Kugelmulden 28 in dem Widerlager 11 angeordnet sind. Die Anordnung erfolgt oberhalb der Abstützung 16, wobei die Kugeln 27 mit dem eben genannten Stift 24 zusammenwirken, der in Gebrauchslage den beiden Kugeln 27 anliegt.

In Figur 2 ist erkennbar, daß der parallelogrammartige Rahmen 9 an dem oberen Ring 5 festliegt. Hier kann er beispielsweise angeschweißt, angelötet oder aber auch aus einem Stück gefertigt sein. Von dem oberen Ring 5 verlaufen zwei Rahmenschenkel 30 und 31 in etwa parallel zu einem Ring 32, welcher auch die oben beschriebenen Durchgangsbohrungen 12 aufweist. In diesen Ring 32 wird ein Ring 33 des Widerlagers 11 eingesetzt, sofern das Widerlager 11 gesondert von dem parallelogrammartigen Rahmen 9 ausgebildet ist. Andernfalls ragt, wie in Figur 2 gezeigt, das Widerlager 11 von dem Ring 32 nach oben auf.

Wesentlich ist, daß zumindest einer der Rahmenschenkel 30 bzw. 31 mit zumindest einem Dehnmeßstreifen 34 belegt ist, welcher, bei einer Lageveränderung des parallelogrammartigen Rahmens 9 ein Signal zu einer nicht näher gezeigten Erfassungseinheit abgibt. Derartige Funktionen eines Dehnmeßstreifens sind allgemein bekannt und sollen hier nicht näher beschrieben werden. Wesentlich bei der vorliegenden Erfindung ist aber, daß, bei welcher Bewegung des Wippbolzens bzw. des Taststiftes auch immer, der parallelogrammartige Rahmen 9 oder ein entsprechendes zuvor bereits erwähntes Linearführungselement sich in einer parallelen Bewegung in Richtung x vom Lager wegbewegt. Hierdurch wird eine absolut sichere Abgabe des notwendigen Signals durch den Dehnmeßstreifen oder ein anderes Meßelement (z.B. Induktiv-Meßwertaufnehmer) gewährleistet. Nur das Widerlager 11 kann einer Auslenkung des Wippbolzens 8 nachgeben, wobei die Parallel-Auslenkung nur in Richtung x geschehen kann, wie dies in Figur 2 und Figur 7 angedeutet ist.

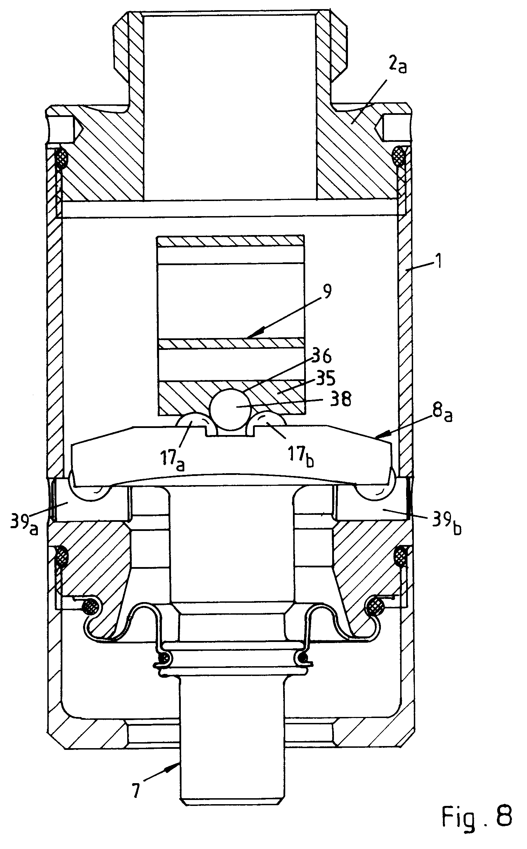

In dem Ausführungsbeispiel gemäß den Figuren 7 und 8 sind ein ortsfestes Lager 10a und ein bewegbares Widerlager 11a in dem Gehäuse 1 übereinander angeordnet. Das Widerlager 11a ist ähnlich ausgebildet wie das Widerlager 11 und weist somit auch einen parallelogrammartigen Rahmen 9 auf. Dieser Rahmen 9 ist mit einem Einsatz 2a verbunden.

Andererseits des Einsatzes 2a ist an den Rahmen 9 ein Stützstreifen 35 angeformt, welcher eine Mulde 36 ausbildet, in der zwei Bolzenabschnitte 37 und 38 ruhen. Jeder Bolzenabschnitt 37 bzw. 38 wirkt mit einer Abstützung 16 zusammen, die wiederum aus Kugeln 17a bzw. 17b bestehen. Die Kugeln 17a und 17b ruhen in entsprechenden Aufnahmemulden in einer Wippscheibe 8a, von welcher das Anschlußstück 7 abragt. Hierbei befinden sich die Abstützungen 16 auf der Oberseite der Wippscheibe 8a, während sich auf der Unterseite der Wippscheibe beidseits des Anschlußstücks 7 weitere Kugeln 27a und 27b befinden, welche mit einem festen Lager 10a zusammenwirken. Dieses feste Lager 10a besteht in diesem Ausführungsbeispiel aus zwei beidseits des Anschlußstückes 7 angeordneten Bolzenstücken 39a und 39b, welche zwischen den Kugeln 27a und 27b liegen. Welche Bewegung auch immer ein mit dem Anschlußstück 7 verbundener Taststift vollzieht, bewirkt ein Verschieben des Rahmens 9 in Richtung x, wodurch ein nicht näher gezeigter Sensor angesprochen wird.

## Patentansprüche

**1.** Tastfühler zur Erfassung einer Auslenkung eines Taststiftes od. dgl., welcher mit einem bewegbaren Wippelement (8) verbunden ist,
dadurch gekennzeichnet,
daß das Wippelement (8) bei seiner Auslenkung in eine beliebige horizontale und/oder vertikale Richtung einen Sensor (34) anspricht, welcher ein Schaltsignal an eine Erfassungseinheit abgibt und in mindestens einer Richtung dynamisch Meßwerte aufnehmen kann.

**2**. Tastfühler nach Anspruch 1, dadurch gekennzeichnet, daß das Wippelement (8) zwischen einem ortsfesten Lager (10) und einem bewegbaren Widerlager (11) angeordnet ist, welches den Sensor (34) anspricht.

**3**. Tastfühler nach Anspruch 2, dadurch gekennzeichnet, daß das Wippelement (8) zwischen dem ortsfesten Lager (10) mit zwei Abstützpunkten und einem parallelbewegbaren Widerlager (11), mit ebenfalls zwei Abstützpunkten, angeordnet ist, welches den Sensor (34) anspricht.

**4.** Tastfühler nach Anspruch 2 oder 3, dadurch gekennzeichnet, daß das Wippelement (8) zwischen dem ortsfesten Lager (10), welches die Lagebestimmung in zwei Achsen, und einem bewegbaren Widerlager (11), welches die Lagebestimmung in der anderen Achse übernimmt, mittels Abstützungen (16) gehalten ist.

**5.** Tastfühler nach Anspruch 4, dadurch gekennzeichnet, daß die Abstützungen (16) aus je mindestens zwei übereinander angeordneten Kugeln (17) oder prismenähnlich konvergierenden Flächen bestehen, welche sich in dem Lager (10) bzw. dem Widerlager (11) befinden, wobei an je zwei übereinander angeordneten Kugeln (17) oder prismenähnlich konvergierenden Flächen ein Querbolzen (18) anschlägt, welcher das Wippelement (8) quert.

**6.** Tastfühler nach Anspruch 5, dadurch gekennzeichnet, daß ein senkrecht zum Querbolzen (18) verlaufender Stift (24) in dem Wippelement (8) vorgesehen ist, welcher sich wiederum gegen eine weitere, bevorzugt aus zwei Kugeln (27) bestehende Abstützung am Widerlager (11) abstützt.

**7.** Tastfühler nach Anspruch 5 oder 6, dadurch gekennzeichnet, daß in das Wippelement (8) andererseits der Abstützungen (16) eine Einformung (20) eingeformt ist, in welche ein Querbolzen (25) eingreift, der das Widerlager od. dgl. Lager (10, 11) durchsetzt.

**7.** Tastfühler nach Anspruch 6, dadurch gekennzeichnet, daß in einen Muldengrund (21) der Einformung (20) ein Langloch (22) etwa senkrecht zu dem Querbolzen (18) eingeformt ist, aus welchem ein Stiftausschnitt (23), bevorzugt als Teil des Stiftes (24), herausschaut, an dem in Gebrauchslage der Querbolzen (25) oder alternativ zwei konvergierende Flächen, bevorzugt Kugeln, anliegen.

**8.** Tastfühler nach wenigstens einem der Ansprüche 1 bis 7, dadurch gekennzeichnet, daß das Wippelement als Wippbolzen (8) ausgestaltet ist, dessen eines Ende mit dem Taststift verbunden und in dessen anderes Ende der Stift (24) eingesetzt ist, während der Querbolzen (18) senkrecht zum Stift (24) angeordnet ist.

**9**. Tastfühler nach wenigstens einem der Ansprüche 1 bis 8, dadurch gekennzeichnet, daß das Lager (10) ortsfest an einem Einsatz (2) oder dem Gehäuse (1) selbst angeordnet ist, wobei der Einsatz (2) einen Rahmen (9) aufweist, an welchem sich das Widerlager (11) befindet.

**10**. Tastfühler nach Anspruch 9, dadurch gekennzeichnet, daß der Rahmen (9) parallelogrammartig ausgebildet ist.

**11.** Tastfühler nach Anspruch 9 oder 10, dadurch gekennzeichnet, daß der Rahmen (9) zwei parallel verlaufende Rahmenschenkel (30, 31) aufweist, welche einem oberen Ring (5) angeformt sind, der auch das Lager (10) hält.

**12.** Tastfühler nach Anspruch 11, dadurch gekennzeichnet, daß die Rahmenschenkel (30, 31) andererseits des oberen Ringes (5) über einen Ring (32) miteinander verbunden sind.

**13.** Tastfühler nach Anspruch 12, dadurch gekennzeichnet, daß von dem Ring (32) das Widerlager (11) aufragt.

**14.** Tastfühler nach Anspruch 12, dadurch gekennzeichnet, daß das Widerlager (11a) einen Ring (33) aufweist, mit welchem es in den Ring (32) des Rahmens (9) sitzt und dort verbunden ist.

**15.** Tastfühler nach wenigstens einem der Ansprüche 9 bis 14, dadurch gekennzeichnet, daß am Rahmen (9) bevorzugt an zumindest einem Rahmenschenkel (30, 31) zumindest ein Dehnungsstreifen (34) als Sensor angeordnet ist.

**16.** Tastfühler nach wenigstens einem der Ansprüche 2 bis 8, dadurch gekennzeichnet, daß das Widerlager, anstatt durch ein Federparallelogramm, durch eine Linearführung geführt und durch ein entsprechendes Vorspannelement zur Rückstellung gebracht wird.

**17.** Tastfühler nach wenigstens einem der Ansprüche 2 bis 8, dadurch gekennzeichnet, daß die in den vorigen Ansprüchen genannten Querbolzen und konvergierenden Flächen, bevorzugt Kugeln, auch im Wechselspiel angebracht sind.
